# EUROPEAN PATENT APPLICATION

(11) **EP 4 793 723 A1**
(43) Date of publication of application: **19.08.2026**
(21) Application number: 25157739.1
(22) Date of filing: 13.02.2025
(51) Int. Cl.: G05B 19/042, G05B 23/02, H04L 9/40

(54) **METHOD FOR INDUSTRIAL PLANT EVENT HANDLING**

(71) Applicant: ABB SCHWEIZ AG, 5400 Baden (CH)
(72) Inventor: COPPIK, Nicolas, 68165 Mannheim (DE); SCHOCH, Nicolai, 69120 Heidelberg (DE)
(74) Representative: Maiwald GmbH

(57) **Abstract**

The invention provides a computer-implemented method for industrial plant event handling comprising an analytics component employing pattern and/or correlation analysis and/or trend analysis and/or anomaly detection to: in response to an alert being triggered by a Security Information and Event Management, SIEM, system, assess a likelihood of the alert being based on a false positive determination; and/or in response to an alert being triggered by the SIEM system, intervene in the processing of the alert by the SIEM system; and/or in response to an alert being triggered by the SIEM system, provide context information relevant for the alert to a user; and/or propose to a user and/or deploying, autonomously or in response to user confirmation, an update for an alert detection rule of the SIEM system, based on one or more of: current alert information; control system information; historical alert information.

## Description

### FIELD OF THE INVENTION

The invention pertains to a method for industrial plant event handling, a data processing system, a computer program product, and a computer-readable medium.

### BACKGROUND

Event handling in industrial plants is a challenging task. There are systems available, referred to as Security Information and Event Management, SIEM, systems. Such systems have basic functionalities for event handling, particularly triggering alerts.

However, in many practical applications, the known SIEM systems lack flexibility, effectively limiting the accuracy and reliability in a practical setting, as they have limited capabilities of taking into account the specific plant in which they are employed.

It is an object of the present invention to provide a method that addresses at least some of the above challenges, in particular provides a more flexible method, particularly a method that allows for increased accuracy and reliability.

### SUMMARY

The invention provides a method for industrial plant event handling, a data processing system, a computer program product, and a computer-readable medium specified in the independent claims. Preferred embodiments are laid down in the dependent claims.

The present disclosure provides a computer-implemented method for industrial plant event handling.

Industrial event handling may comprise actions responsive to a (potential) event in a plant. Event handling may, for example, be based on sensor data and/or operational data. In case an irregularity is detected in said data, this may be indicative of an event. The data may be analyzed, for example by the SIEM system, and may trigger an alert, which may be output to a user, and/or may trigger an automatic action, such as shutdown of and/or control actions for components of the plant, or may result in no action being taken. Events and/or alerts may be logged.

In some examples, events are the input provided to the SIEM system from a control system, typically corresponding to a change in plant or control system state or an operator action at a specific point in time (e.g. control system alarm disabled at time X, new control application downloaded to controller at time Y, ...), or from the related IT equipment (log and event data from the operating system running a control system node, for instance). Which events are provided to the SIEM system is a matter of configuration for each specific plant. Events can be provided as part of an event stream.

SIEM systems may, for example, operate based on rules, which match individual events or patterns of events, and can match based on the content, type, sequence, or timing of events, or other information provided to them (e.g., reference data). How these are specified varies between SIEM systems. When such a rule is triggered, the SIEM system may raise alert. It is noted that generally SIEM alerts are to be distinguished from alarms in the control system itself.

The method comprises an analytics component employing pattern and/or correlation analysis and/or trend analysis and/or anomaly detection.

Common techniques may be used, which are described in more detail below, such as statistical and/or ML methods.

Pattern and/or correlation analysis and/or trend analysis and/or anomaly detection may be used for identifying similarities between alerts, e.g. identifying alerts that are similar to each other (e.g. by classification or comparing features in statistical analysis). This may include a current alert and historical alerts. Similar alerts may, in particular, be events in a similar operational context. Similarity can be quantified as needed in a given context, which will be exemplified with some specific examples. For example, when using a classifier, alerts may be considered "similar" if they are in the same class. Alerts (and their context features) may be embedded as embedding vectors and considered "similar" if their distance does not exceed a predetermined threshold. Alerts maybe considered "similar" when features identified in the operational data associated with the alerts, e.g. by statistical methods, meet similarity criteria. The skilled person will understand that other similarity metrics can be used together with predetermined criteria to determine "similar" alerts, e.g. alerts in a "similar" operational context.

The analytics component may employ pattern and/or correlation analysis and/or trend analysis and/or anomaly detection to, in response to an alert being triggered by a Security Information and Event Management, SIEM, system, assess a likelihood of the alert being based on a false positive determination.

The output of assessing the likelihood may comprise a binary output, such false or non-false (i.e. true) positive determination, or a non-binary output (e.g. 10% or 90% likely that there is a false positive determination), optionally, both may be output. Determining such a likelihood is advantageous, as it may then allow to take certain steps depending on the likelihood, e.g. only prompting actions, particularly user actions, when the output indicates low likelihood of false positive determination, e.g. within a predetermined interval, or (in the binary case), when the output is non-false (i.e. true) positive determination. This allows for avoiding taking actions in response to false positive determinations of alerts. Thus, efficiency and reliability may be increased.

Alternatively or in addition, the analytics component may employ pattern and/or correlation analysis and/or trend analysis and/or anomaly detection to, in response to an alert being triggered by the SIEM system, intervene in the processing of the alert by the SIEM system.

The SIEM system may, for example, process an alert by issuing an output to trigger a user action/intervention. The analysis component intervening may, for example, comprise preventing issuing such an output under certain conditions, e.g. in case it determines an alert is based on a false positive determination. Thus, existing SIEM system capabilities can be fully employed, yet the overall outcome can be improved by the analytics component intervening based on its comparably enhanced capabilities.

Alternatively or in addition, the analytics component may employ pattern and/or correlation analysis and/or trend analysis and/or anomaly detection to, in response to an alert being triggered by the SIEM system, provide context information relevant for the alert to a user.

Context information relevant to a user may comprise context information concerning the current alert, but particularly may provide context information based on historical alerts, e.g. typical user actions taken for similar alerts, particularly for alerts in similar operational context. Providing context information may also include providing or suggesting additional information users historically accessed in response to similar alerts.

Alternatively or in addition, the analytics component may employ pattern and/or correlation analysis and/or trend analysis and/or anomaly detection to propose to a user and/or deploying, autonomously or in response to user confirmation, an update for an alert detection rule of the SIEM system.

For example, if, based on the analytics component's assessment, it is found that a higher-than-expected rate of false positive alerts are issued for a group of similar alerts, an alert detection rule associated with such alerts may be updated. This allows for iterative learning and improvement of SIEM rules and, particularly, making the SIEM system (independently of the analytics component), more reliable. This may be particularly important in cases where the analytics component is inactive during normal operation, in which case the overall reliability depends solely on the SIEM system's reliability and, hence, the accuracy of the alert detection rules.

The above steps, respectively, are based on one or more of:
- Current alert information comprising, for the alert triggered by the SIEM, SIEM input information associated with the alert, in particular wherein the SIEM input information comprise a subset of current operational information.
   Current alert information may be used, for example, to identify similar historical alerts, e.g. classifying the current alert information into a class of alerts and/or determining similar characteristics. Current operational information may comprise operating parameters at the time of the current alert, e.g. of plant equipment, and/or measurement results, e.g. from sensors monitoring the plant. Operational information may, for example, be provided by a control system, e.g. a plant controller and/or by sensors. Optionally, current alert information may also be derived from user interactions via a user interface.
- Control system information including engineering information and/or current operational information and/or historical operational information
   Engineering information may comprise information about one or more of the configuration of the plant, the general control setup of the plant, available modes of operation, interactions between components, feedback loops, monitoring equipment information, target intervals for operation parameters, or the like. Operational information, as described above, comprise operating parameters and/or measurement results and optionally may be derived from user interactions. For example, a user initiating a certain order of steps may indicate an operational context, such as mode of operation, e.g. start up or shut down or test drive or normal operation.
- Historical alert information comprising, for one or more past alerts triggered by the SIEM system, one or more actions taken by a user in response to the respective alert and operational context of the respective alert, the operational context including SIEM input information associated with the respective alert and/or control system information associated with the respective alert.
   For any alert, current alert information may be logged together with the alert and the log may represent the

Thus, the present disclosure is able to provide an analytics-enhanced event processing/handling in a SIEM context. The challenges of the prior art are addressed. Particularly, event handling can be made more efficient and can be flexibly adjusted to the plant at hand and its specific characteristics and requirements, particularly iteratively and automatically, possibly even autonomously. Alerts can be handled in a manner that allow for users to focus on relevant tasks rather than being prompted to respond to potential false positives, thereby increasing overall reliability of a plant operation.

In an aspect according to the present disclosure, the analytics component assesses the likelihood of the alert being based on a false positive determination based on: current alert information, current operational information, and historical alert information including one or more actions taken by a user in response to alerts and the operational context of the respective alerts.

A likelihood of an alert being a false positive determination may comprise detecting one or more historical alerts being similar to the current alert, for example based on current and historical context information, particularly operational context, of the respective alerts. Based on respective user actions in response to said similar historical alert(s), for example unexpectedly high number and/or ratio of dismissal of said historical alert(s), it may be predicted that the current alert is based on a false positive determination.

The one or more actions may comprise dismissal of the alert, wherein the alert is determined and optionally flagged as being based on a false positive determination in case a dismissal rate by a user of alerts in a similar operational context, as determined by the pattern and/or correlation analysis and/or trend analysis and/or anomaly detection, exceeds a predetermined threshold.

The dismissal rate as a measure for predicting false positive determination may allow for precise predictions without requiring any labeling by a user or providing elaborate reasoning by the user for dismissal, e.g. analysis by the user of the context in which the dismissal took place. Accordingly, while yielding precise predictions, the method requires low-effort and is efficient.

In an aspect according to the present disclosure, the analytics component intervening in the processing of the alert by the SIEM comprises the analytics component preventing prompting of a user intervention unless an uncertainty of the analytics-component-based assessment of the likelihood that the alert is a false positive exceeds an uncertainty threshold. Alternatively or in addition, the analytics component intervening in the processing of the alert by the SIEM comprises, unless an uncertainty of the analytics-component-based assessment of the likelihood that the alert is a false positive exceeds an uncertainty threshold, prompting only a user confirmation of a false positive determination. There may be two uncertainty thresholds, a first uncertainty threshold below which only a user confirmation of a false positive determination is prompted and a second uncertainty threshold, lower than the first uncertainty threshold, below which no user action is prompted.

That is no user action may be prompted at all as long as the certainty of determination is considered high enough based on a predetermined threshold and/or only a user confirmation may be required as long as the certainty of determination is considered high enough based on a predetermined threshold. If both options are combined, different levels of uncertainty may be associated with different requirements regarding user action, e.g. no action or only confirmation of false positive determination.

This allows for high efficiency and also contributes to reliability of the operation of the plant, as the user will be able to focus on truly important tasks rather than carrying out actions that may not be required at all.

The uncertainty may be indicative of the uncertainty of the determination by the analytics component whether the alert is based on a true or false positive determination by SIEM, the uncertainty being determined by the analytics component, by employing pattern and/or correlation analysis and/or trend analysis and/or anomaly detection, based on the current alert information and at least one of the historical alert information and the control system information.

As explained above, for example, in case there is an unexpectedly high dismissal rate of alerts in a similar context, it may be deduced for other similar alerts (e.g. the current alert), e.g. alerts in a similar operational context, that they are likely based on a false positive determination. The prediction of a true or false positive may have higher or lower certainty, e.g. depending on how similar said alerts are and/or statistical significance, e.g. based on how much data underlies the determination (e.g. how many similar alerts where found).

In an aspect according to the present disclosure, the analytics component providing context information relevant for the alert comprises determining context information based on current alert information, current operational information, and based on historical alert information for alerts triggered in a similar operational context, as determined by the pattern and/or correlation analysis and/or trend analysis and/or anomaly detection.

For example, a log may be maintained comprising, for historical alerts the respective operational context and optionally user response.

Based on pattern and/or correlation analysis and/or trend analysis and/or anomaly detection, e.g. employing the data maintained in the log, a current alert may be analyzed. In particular, pattern and/or correlation analysis and/or trend analysis and/or anomaly detection may be used to determine, for a current alert, historical alerts triggered in a similar operational context and/or information associated with these historical alerts, for example user action patterns. Information associated with these historical alerts may be provided as or used as basis for determining context information for the current alert. In order to determine historical alerts triggered in a similar operational context, current alert information and current operational information are analyzed.

The context information may comprise an indication of user actions taken for alerts in a similar operational context, as determined by the pattern and/or correlation analysis and/or trend analysis and/or anomaly detection, and/or information required for addressing alerts in a similar operational context, as determined by the pattern and/or correlation analysis and/or trend analysis and/or anomaly detection.

For example, a log may be maintained the log comprising historical alerts and, for each historical alert, an indication of a user action taken in response to the historical alert. Alternatively or in addition, the log may comprise, for the historical alerts, information required for addressing the alerts, such as technical information like current operational parameters. In particular, an indication of what information was provided to, e.g. accessed or retrieved by, a user in response to a respective historical alert may be comprised in the log. This may serve for analyzing patterns of user actions. Alerts in a similar operational context may be determined in the manner described above and below.

The above allows for faster and more precise user responses, particularly irrespective of a user's skilled, as the appropriate information is retrieved for the user, rather than the user having to select potentially appropriate information.

In an aspect according to the present disclosure, the analytics component proposing and/or deploying the update for the alert detection rule of the SIEM system comprises analyzing a pattern of user actions in response to alerts triggered by the SIEM system based on the alert detection rule and, based on the pattern, determining whether the alert detection rule should be updated.

It may be determined that the alert detection rule should be updated in response to the pattern indicating a higher than expected number of rejections of alerts triggered based on the alert detection rule, particularly triggered in a specific operational context.

For example, a pattern of user actions occurring in response to historical alerts may be determined. The pattern may be determined, for example, by statistical analysis or a machine learning component. In an example, it may be determined, for alerts similar to the current alert, whether the number or percentage of rejects of alerts triggered based on the alert detection rule exceeds a predetermined threshold. The threshold may be set as suitable in accordance with the requirements at hand, e.g. may be lower for alerts that are not safety-relevant compared to alerts that are potentially safety-relevant. Alerts similar to the current alert and/or alerts in a similar context may be determined in the manner described above and below.

Thus, the SIEM system may make more precise predictions leading to overall improved plant operation.

The method of the present disclosure may comprise tailoring a generic SIEM system for a specific industrial plant by, in particular iteratively, deploying one or more updated alert detection rules of the SIEM system.

The deploying may be automatic or in response to a user confirmation. Tailoring the SIEM system will increase the accuracy of the SIEM system's determination to issue an alert. In particular, the number of false positive determinations may be decreased. Since each false positive determination can negatively impact plant operation (e.g. unnecessary shutdowns). Thus, operation of the industrial plant will be improved.

In an aspect according to the present disclosure, the analytics component is configured to employ machine learning, such as using an artificial neural network, or statistical analysis. In particular it may comprise a machine learning component trained on the historical alert information, and optionally the control system information, and/or employs statistical analysis of current and historical information, particularly statistical analysis of historical alert information and current alert information.

Machine learning components and analytics components are each suitable for learning from a data set, such as the historical data, and determining for a new input, such as current alert data, how the new input relates to the historical data. For example, similar alerts in similar contexts may be identified by such components. The machine learning component may, for example, be trained on the historical data. The training data may involve, for multiple historical alerts, context (e.g. operational context) of the alerts. It may learn to classify alerts and a current alert may be classified and further determinations may be carried out based on the class into which the current alert was classified. Optionally, the training data may also include how a user responded to the alert, such that the output of the machine learning component may output (instead of or additionally to a classification of the alert) a suggestion for responding to the alert. Optionally, the machine learning component may additionally output a confidence in its prediction, e.g. classification and/or suggestion for responding to the alert.

Statistical analysis may comprise analyzing A:B ratios or frequencies. Statistical analysis may take into consideration co-occurrences. For example, if always conditions A, B, C are true then the user always shelfed the alert; however, if A, B, and D, but not C, then the alert was taken seriously.

In an example, exploratory analysis on the data (e.g. the current and historical alert information) may be carried out to determine, which methods (e.g., statistical analysis, pattern analysis, correlation analysis) provide the most insightful and reliable information.

In an aspect according to the present disclosure, the analytics component comprises a/the machine learning component, for example employing an artificial neural network, generating generic alert detection rules based on federated learning carried out by the analytics component and a plurality of further analytics components associated with different industrial plants, in particular, wherein, after generating the generic alert detection rules, the generic alert detection rules are updated by the analytics component to adapt them to the industrial plant.

Federated learning may involve multiple machine learning components sharing results of their respective learning, for example trained models or weights obtained by the training based on their respective training data, for use by other machine learning components to update their respective model or weights, sometimes via a central entity. This allows leveraging larger amounts of data without necessarily sharing data. Training based on the respective training data of the industrial plant at hand, the model can be tailored to the industrial plant. This may allow to account for differences between the industrial plants.

In all of the above aspects and examples, the analytics component could be deployed as part of a tool for SIEM rule maintenance, e.g. that may be deployed on-premise at a plant. The analytics component may process historical data from the control system and a history of SIEM alerts and corresponding user or expert decisions, and suggest rule updates based on this, e.g., to reduce false positives. Generally, but particularly when the analytics component is deployed as part of a tool for SIEM rule maintenance, the analytics component may be inactive during normal operation of the plant, i.e., it may not necessarily be employed for supporting users during normal operation of the plant.

The invention also provides a data processing system comprising one or more processing components configured to carry out the method of the present disclosure. The data processing system may be implemented as a distributed system or as a centralized computing system, for example, a computer. The data processing system may comprise at least a processor, and optionally a memory unit.

The present disclosure also provides a system comprising the data processing system and an industrial plant, wherein optionally at least part of the data processing system may be part of a plant control system.

The invention also provides a computer program product comprising instructions which, when the program is executed by a computer, cause the computer to carry out any of the methods of the present disclosure.

The invention also provides a computer-readable medium comprising instructions which, when executed by a computer, cause the computer to carry out any of the methods of the present disclosure.

The features and advantages outlined above in the context of the method similarly apply to the data processing system, the computer program product, and the computer-readable medium described herein.

Further features, examples, and advantages will become apparent from the detailed description making reference to the accompanying drawings.

### BRIEF DESCRIPTION OF THE DRAWINGS

In the accompanying drawings,
Fig. 1 illustrates a schematic representation of data processing system according to the present disclosure in the context of an industrial plant;
Fig. 2 is a flowchart illustrating a method according to the present disclosure;
Fig. 3 is a flowchart illustrating an example of how SIEM systems are operated;
Fig. 4 is a flowchart illustrating event handling, for example in the context of a SIEM system of Fig. 3;
Fig. 5 is a flowchart illustrating an example of the analytics component of the present disclosure cooperating with a SIEM system;
Fig. 6 is a flowchart illustrating method similar to that of Fig. 4 wherein the analytics component of the present disclosure is incorporated;
Fig. 7 is a flowchart illustrating an example of the analytics component and a feedback system of the present disclosure cooperating with a SIEM system;
Fig. 8 is a flowchart illustrating method similar to that of Fig. 4 wherein the analytics component and feedback system of the present disclosure are incorporated.

### DETAILED DESCRIPTION

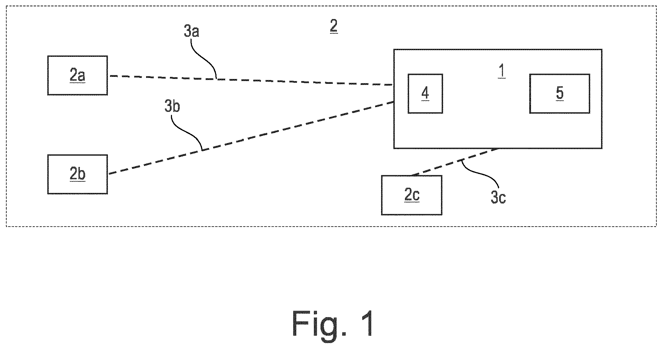

Fig. 1 shows a data processing system 1 according to the present disclosure, comprising means, for example a processing component, e.g. a processor, 1a, for carrying out the method of the present disclosure, for example one of the methods described below.

The data processing system is illustrated in the context of an industrial plant 2 for the sake of illustration. The industrial plant 2 comprises pieces of equipment 2a, 2b, and 2c, which may include productive equipment and monitoring equipment, for example. Data connections 3a, 3b, and 3c may optionally be provided for exchanging data between the data processing system 1 and one or more pieces of equipment of the industrial plant.

An analytics component 4 and a Security Information and Event Management (SIEM) system 5. Here they are illustrated at the processing system 1, which may be configured to run the analytics component and optionally the SIEM system.

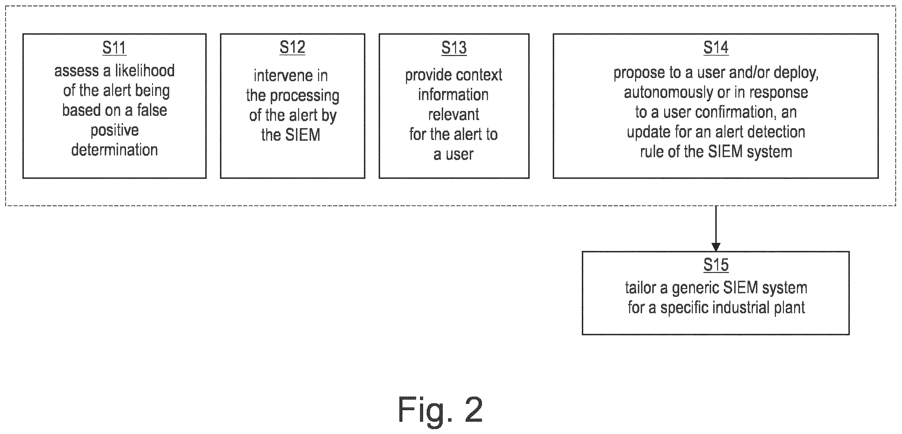

Fig. 2 is a flowchart illustrating a method for industrial plant event handling according to the present disclosure.

The method comprises an analytics component employing pattern and/or correlation analysis and/or trend analysis and/or anomaly detection to perform at least one of steps S11 to S14, respectively based on current alert information and/or control system information and/or historical alert information.

The control system information includes engineering information and/or current operational information and/or historical operational information.

Engineering information may provide general technical context on the plant configuration for the plant at hand, such as setup of components and operating instructions/programming. Operational information may provide the technical context about plant operation (for example operational parameters), for example at the time of an alert. Historical operational information, may provide the technical context about plant operation for past operation of the plant, particularly also during previous alerts. This may be stored in and retrieved from a log, for example. Current operational information may provide context about current plant operation, particularly also for a current alert.

The current alert information comprises, for an alert triggered by the SIEM system, SIEM input information associated with the alert, in particular wherein the SIEM input information comprise a subset of current operational information.

The historical alert information comprises, for one or more past alerts triggered by the SIEM system, one or more actions taken by a user in response to the respective alert and operational context of the respective alert, the operational context including SIEM input information associated with the respective alert and/or control system information associated with the respective alert.

Thus, it will be understood that there may be a relation or even an overlap of SIEM input information, and consequently current/historical alert information, and operational information in that part of the operational information may be included in the SIEM input information and, accordingly, used to obtain the current/historical alert information.

In step S11, in response to an alert being triggered by the SIEM system, a likelihood of the alert being based on a false positive determination is assessed by the analytics component employing pattern and/or correlation analysis and/or trend analysis and/or anomaly detection.

The analytics component may assess the likelihood of the alert being based on a false positive determination based on current alert information, current operational information, and historical alert information including one or more actions taken by a user in response to alerts and the operational context of the respective alerts, e.g. historical operational information at the time of previous alerts.

Generally, pattern analysis, correlation analysis, trend analysis or anomaly detection allow for detecting on a quantifiable basis, when a current alert and one or more historical alerts are similar, not just in terms of the alert being issued, but also in the context in which it occurred, which particularly includes or is derived from operational context at the respective time of the alerts.

The one or more actions may comprise dismissal of the alert, wherein the alert is determined and optionally flagged as being based on a false positive determination in case a dismissal rate by a user of alerts in a similar operational context, as determined by the pattern and/or correlation analysis and/or trend analysis and/or anomaly detection, exceeds a predetermined threshold.

When it is understood how a current alert relates to historic alerts, it can then the reaction to said related historic alerts can also be retrieved, for example based on logs. When the number of dismissals for said related historic alerts is higher than expected for a true positive alert determination, this may be seen as an indicator that the current alert may also not be based on a true positive determination. The related analytics alerts may be considered to be similar alerts to the current alert. The analytics component may determine a false positive determination in response to this. It may also determine a confidence of this determination. For example, a strength of relation (e.g. similarity) between the current and historic alerts, a number of related historic alerts, and/or by how much the predetermined threshold is exceeded may respectively be used as an indicator for confidence, and, accordingly used as input for determining the confidence. The confidence may be output or used for determining an uncertainty, which can be employed in various steps of the present method, as explained below.

In step S12, in response to an alert being triggered by a SIEM system, the analytics component, employing pattern and/or correlation analysis and/or trend analysis and/or anomaly detection, intervenes in the processing of the alert by the SIEM system.

This may comprise, as an example, preventing prompting of a user intervention. For example, no alert may be issued. The alert may nonetheless be logged together with its context. Alternatively, this may comprise prompting only a user confirmation of a false positive determination (e.g. rather than prompting a user addressing an alert) unless an uncertainty of the analytics-component-based assessment of the likelihood that the alert is a false positive exceeds an uncertainty threshold.

The uncertainty is indicative of the uncertainty of the determination by the analytics component whether the alert is based on a true or false positive determination by SIEM, the uncertainty being determined by the analytics component, by employing pattern and/or correlation analysis and/or trend analysis and/or anomaly detection, based on the current alert information and at least one of the historical alert information and the control system information. For example, the above-described confidence may be or be used as input for determining the uncertainty.

In step S13, in response to an alert being triggered by the SIEM system, the analytics component, employing pattern and/or correlation analysis and/or trend analysis and/or anomaly detection, provides context information relevant for the alert to a user.

Step S13 may comprise determining context information based on current alert information, current operational information, and based on historical alert information for alerts triggered in a similar operational context, as determined by the pattern and/or correlation analysis and/or trend analysis and/or anomaly detection. The context information may comprise an indication of user actions taken for alerts in a similar operational context, as determined by the pattern and/or correlation analysis and/or trend analysis and/or anomaly detection, and/or information required for addressing alerts in a similar operational context, as determined by the pattern and/or correlation analysis and/or trend analysis and/or anomaly detection. For example, for similar alerts in similar contexts, a user may regularly retrieve certain information for review to determine how to react to the alert, such us retrieving specific operational parameters and/or sensor parameters as technical decision basis.

In step S14, the analytics component, employing pattern and/or correlation analysis and/or trend analysis and/or anomaly detection, proposes to a user and/or deploys, autonomously or in response to user confirmation, an update for an alert detection rule of the SIEM system. Step S14 may comprise analyzing a pattern of user actions in response to alerts triggered by the SIEM system based on the alert detection rule. Step S14 may further comprise, based on the pattern, determining whether the alert detection rule should be updated. For example, it can be determined that the alert detection rule should be updated in response to the pattern indicating higher than expected number of rejections of alerts triggered based on the alert detection rule, particularly triggered in a specific operational context.

Such a step and related steps may be carried out by a feedback component incorporated in the analytics component.

The method may comprise optional step S15 of tailoring a generic SIEM system for a specific industrial plant by, in particular iteratively, deploying one or more updated alert detection rules of the SIEM system. This may, in particular, be based on or comprise step S14. Tailoring the SIEM system for a specific industrial plant may allow for taking into account that industrial plants may have different operational behavior, such that, for example, in some plants an event might be critical and warrant an alert, whereas in other plants the event may be uncritical enough such that an alert may not be required.

For the above-described steps, the analytics component may employ machine learning, such as using a neural network, or statistical analysis. For example, the analytics component may comprise a machine learning component trained on the historical alert information, and optionally the control system information, and/or employs statistical analysis of current and historical information, particularly statistical analysis of historical alert information and current alert information.

Statistical analysis, also referred to as statistics-based analytical methods, may, for example, look at relative A:B frequencies or the like. This may result in a rule such as "if alert X happens with context Y and is shelfed/dismissed in 9 out of 10 occurrences, then [deal with it in a particular way]".

In some examples, the machine learning component of the analytics component generates generic alert detection rules based on federated learning carried out by the analytics component and a plurality of further analytics components associated with different industrial plants. After generating the generic alert detection rules, the generic alert detection rules are updated by the analytics component to adapt them to the industrial plant. This allows for leveraging large amounts of data via the federated learning, while also tailoring the system for the industrial plant.

The present disclosure, as has been discussed above, involves interactions with a SIEM system.

Security Information and Event Management (SIEM) is a technology commonly used to increase security in Information Technology (IT) and Operation Technology (OT) environments. The SIEM system may be connected to the IT and/or OT infrastructure of an industrial plant. The SIEM system may, for example continuously, monitor events using detection rules. Such events may be generated by IT or OT infrastructure. When a rule matches the event stream, the SIEM may generate an alert. The alert may be output to a user, for example an operator and/or a security expert. The user may then need to respond to the alert, for example check whether the alert corresponds to an actual threat or is a false positive. The event stream is the sequence of events provided to the SIEM, that is continuously being monitored using the various detection rules.

False positives are common, especially in the OT domain. The inventors found that a reason for this is that context in which the events/alerts occurred (e.g. operational state, plant-specific factors) impacts whether there is an actual threat. Generally, such context is difficult to encode into detection rules. Possible scenarios are varied and different for each plant, and accordingly difficult to predict in advance. For instance, certain operator interventions that are common and necessary during startup or ongoing maintenance would be suspicious or indicative of a threat during normal operation.

For example, some actions, conditions or the like may be alarming during normal operation (because something goes wrong), and hence related alarms/alerts should be taken seriously. However, if these conditions/actions occur during other operating phases, e.g., startup phase of the process plant or during a period where maintenance is ongoing in the plant, then it may be expected and acceptable that these abnormal actions/conditions occur, and hence, they should not cause alerts. With some existing systems, they would likely cause alerts. The operator may know that the respective plant is in startup/maintenance phase and could then decide to dismiss the alert. Taking into account context in the manner proposed by the present disclosure may avoid having to rely on operator being kept from important tasks by such false-positive alerts.

Examples for such conditions include lower than target pressure, which will only reach a target level once startup of the process is finished or a tank level being lower than expected because the tank was temporarily emptied for the sake of maintenance.

Improvement can be made by adjusting rules for each installation and/or plant and calibrating/tuning them over time as such cases (and the false alerts they generate) are observed. This may require revisiting expert assessments of previous alerts and tweaking the rules to avoid generating false alerts in the future. Existing approaches require experts to evaluate past alerts, determine relevant factors for distinguishing between true and false alerts, and encoding those factors in updated versions of the rules, which is a time-consuming and complex process.

In the present disclosure, the analytics component does not need to rely on the presence of event annotations or marked anomalies. Its output (e.g., false positive assessment, suggested rule updates, relevant context) can be based on any of the inputs it has access to, allowing it to consider context information that was not deemed relevant for event annotations or considered in the SIEM rules themselves.

The method of the present disclosure, on the other hand, allows for faster, more efficient, and more precise determination of detection rules, fewer false positives, and a higher frequency of rule updates.

The method of the present disclosure may be seen as an enhancement of a SIEM system that integrates advanced analytics and/or intelligent feedback mechanisms for more comprehensive and self-improving event analytics. It provides additional functionality over conventional SIEM solutions. The functionality allows efficiently and precisely customizing SIEM rules for individual installations and improving SIEM rules over time, notably while also reducing the amount of manual effort required for tuning and tweaking rules.

The method and system of the present disclosure may comprise learning from expert assessments, assessing the criticality of alerts, and suggesting relevant context to experts working with the SIEM system. During operation, the method and system may observe the alerts generated by the SIEM system, the operational context in which they occurred, and the assessment of the alerts by security experts. As the system and method learn from these expert assessments, they can automatically assess the criticality of alerts with increasing precision. The method and system can also suggest relevant information about the operational context that experts may need to take into account, as well as generating updated rules. Alerts that the method and system can determine to be a false positive with a high degree of certainty can be processed automatically, without user intervention.

Thus, the enhanced SIEM system achieves better false-alert-avoidance and more precise threat detection. This results in less manual effort for each SIEM installation, both for rule tuning and for assessing alerts, than conventional systems.

The present disclosure, for example, may provide an analytics component. The analytics component may compare SIEM alerts and expert assessments of events, e.g., may compare what existing SIEM rules say for an Event vs. what the Event really was (after and based on expert assessment). The analytics component may use pattern analysis, trend analysis and/or anomaly detection methods to provide better assessments of the criticality or likelihood of false positives. The analytics component and additionally suggests a useful context to consider with the alerts/events in the future, e.g., factors that have previously been correlated with expert decisions.

The analytics component may be configured to process different kinds of information describing the design, engineering or operation of a process plant and/or control system. The analytics component may process said information, for example in order for providing enhanced insights into the system/operation for assistance to the expert. The insights may result from pattern and/or correlation analysis of event patterns, event labels, etc. (e.g. as outputs from statistical analysis, data analytics, or ML methods). This in turn may allow to derive enhanced SIEM rules or best practices for better, e.g. more comprehensive context-aware and/or precise, alert handling. Thus, the user may be assisted in their technical task, particularly may be able to focus on really important matters rather than addressing false-positives, or by considering typical but complex operator behavior.

Optionally, in addition to the analytics component, the present disclosure may provide a feedback system/component and/or "active learning" component for further improving the SIEM system setup, e.g., by triggering/questioning a human expert only in case of high uncertainty of the SIEM system or analytics algorithm. The feedback component may integrate human expert feedback to improve the represented SIEM rules and to increase the confidence and certainty of event predictions.

The feedback system and/or active learning component may be configured to iteratively improve/extend and re-validate the SIEM rules. The feedback system and/or active learning component may be configured to, e.g. based on highly uncertain labels or analytics trends, trigger a human expert for specific (minimal) feedback, without always requiring this feedback, and while continuously decreasing the need for such feedback.

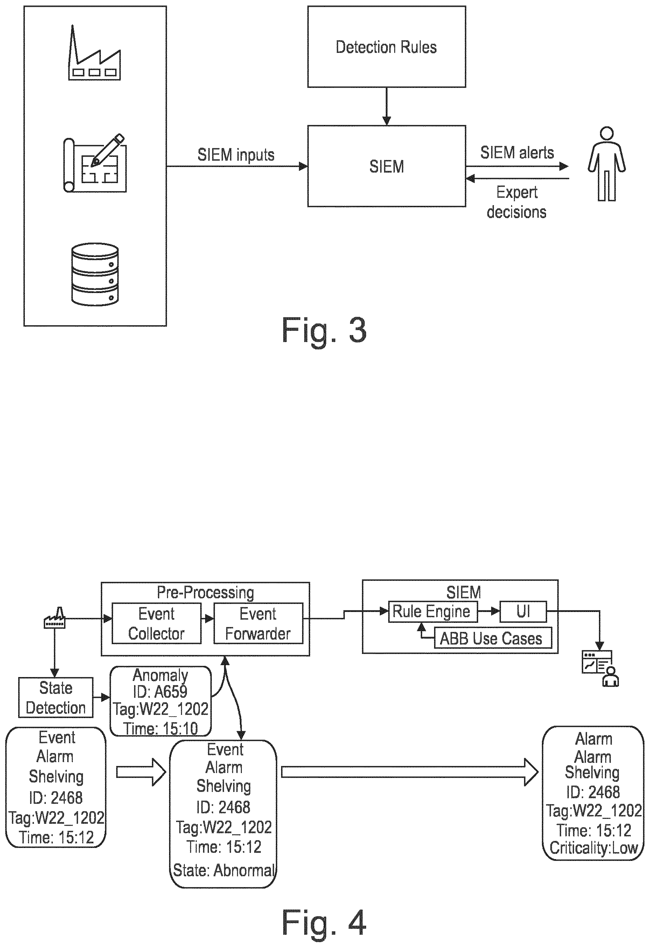

Some aspects of the present system and methods are provided below in a general manner and will then be described in more detail in the context of Figs. 3 to 8.

The present disclosure provides a method and system that may leverage different kinds of information describing the design, engineering or operation of a process plant and control system. For example, information about the design/engineering of a control system (also known as "Leitsystem"), such as process information or alarm configuration may be used as input. As another example, information about the operation of a control system, such as that the operator had gotten 5 times in a row the same alert and had shelved it 5 times in a row, always under a certain (set of) condition(s), may be used as input. As another example, information about the operation of a plant in a historical database (e.g. a database of event and other logged data, such as conditions, parameters, etc. most often along with time stamps, also referred to as a "historian"), containing alert and event logs, may be used as inputs. The method may allow for taking the entirety of this information (in context) for making assessments. The assessments may be leveraged to the expert and user in their technical tasks, e.g. by providing enhanced insights into the system/operation. This may allow to carry out relevant tasks rather than resources being taken up by false alerts, for example. The analysis may be based on analysis and consideration of patterns and correlations (statistical analysis, analytics and ML). The method may also allow, particularly based on patterns and correlations, to derive enhanced rules or best practices for alert management. Moreover, relevant contexts in process automation solutions and thereon-based enhanced SIEM rules/best practices may be provided.

According, a user is assisted in their technical tasks and, particularly, allow the expert to focus on the really important matters, e.g. by better avoiding false-positives.

The proposed system and method, in the context of a SIEM system, could suggest improvements or improved/enhanced/updated SIEM rules. Subsequently, for example only after a certain level/number of acceptance/approvals had been achieved/recorded, the proposed system and method may embed the insights and updated/enhanced rules into the actual SIEM system.

Furthermore, the system and method of the present disclosure may have a (human) user feedback integration and learning component so the original/extended SIEM rules system can iteratively be improved/extended and re-validated.

The proposed system hence can be used to assist a user, such as a security expert, working with a SIEM system in process automation by providing them with ML/Al-derived insights and enhanced rules based on analysis of relevant context information and historical data.

Further features and advantages will be illustrated below making reference to Figures 3 to 8.

A basic setup consisting of an industrial control system, containing a security monitoring component that forwards potentially security-relevant data to a SIEM system may be used as a basis for the method and system of the present disclosure. The SIEM system processes events by evaluating a set of detection rules and generates security alerts if one or more of the rules are triggered. This is illustrated in Fig. 3.

Specifically, Fig. 3 illustrates a plant with equipment providing inputs to the SIEM (referred to as SIEM inputs). The SIEM also accesses the detection rules including rules indicating circumstances under which an alert is to be issued. The SIEM system then applies the detection rules to the SIEM inputs. Applying the detection rules to the SIEM inputs may result in the SIEM issuing one or more alerts (referred to as SIEM alerts). A user, in response to the SIEM alerts, may interact with the system, for example with the SIEM system, via a user interface. The user may dismiss or shelve an alert, for example if the user considers the alert to be a false positive, or take steps responsive to the alert, for example take corrective action immediately or first accessing additional data prior to taking corrective action or dismissing or shelving the alert.

Such a setup may be modified to provide additional information to the SIEM system, e.g. information that reflects the operational state of the plant, to reduce the risk of the SIEM system generating false positives in an abnormal operational situation. With this modification, the SIEM system takes this additional information, also called event annotations, into account when processing its detection rules, and based thereon may change the severity of an alert and/or silence a security alert according to pre-defined rules. An example of this modification being used to annotate events and, e.g., alter the severity of a security alert generated by a SIEM system is shown in Fig. 4.

Fig. 4 illustrates state detection, which may lead to anomaly detection. Specifically, Figure 4 shows an OT SIEM system with a state detection component, which annotates events with information about the plant state at the time of the event. The event collector obtains events from the underlying control system (including OT and IT events), and the forwarder sends these to the SIEM system. The preprocessing performed by these components includes annotating them with information provided by the state detection, information about the event source (e.g., which node it was collected from in a distributed system), etc. The SIEM, has a rule engine and a user interface. The SIEM may issue an alert, which can be output via the user interface, for example. The user may interact with the SIEM via the user interface, e.g. to dismiss the alert or take steps in response to the alert. It is noted that alerts and alert annotations may be stored as historical alerts (or events).

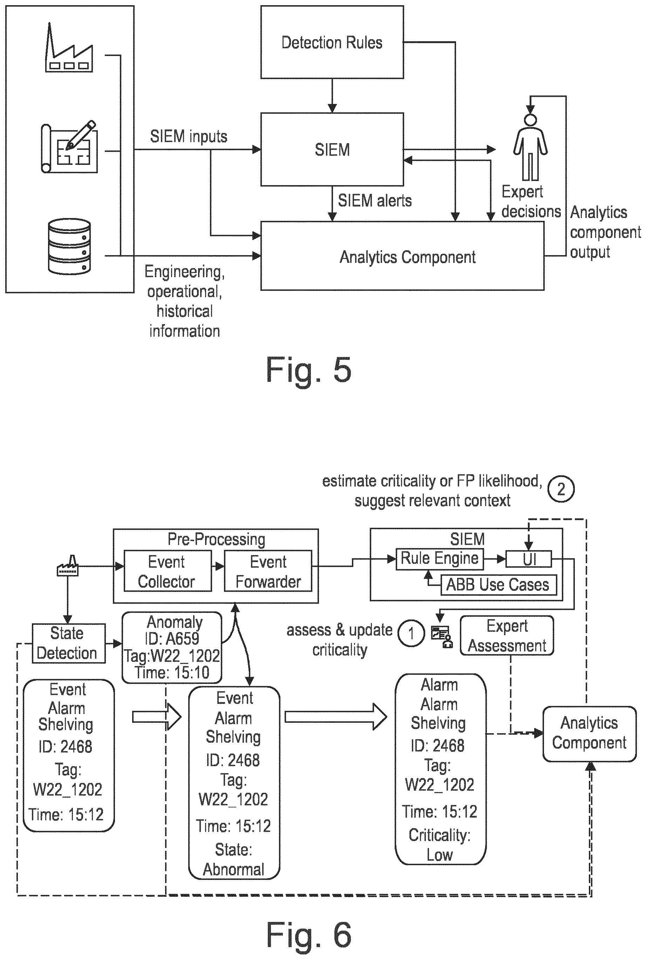

Fig. 5 is a flowchart illustrating an example of the analytics component of the present disclosure cooperating with a SIEM system. Such a system may, for example, provide analytics-enhanced false alert avoidance. The analytics component allows more comprehensive and self-improving event analytics.

The system in Fig. 5 is similar to that of Fig. 3 in that it also comprises an industrial plant providing SIEM inputs to a SIEM system, which uses detection rules to issue SIEM alerts. In addition, an analytics component is provided. For example, in the Figure, it can be seen that SIEM input, and engineering, operational, and/or historical information is provided to the analytics component. Fig. 5 also illustrates that the analytics component receives the SIEM alerts and the detection rules. Furthermore, a user may interact directly with the Analytics Component. The analytic component provides output to an expert in this example.

More specifically, in an example, the analytics component has access to different kinds of static and dynamic information about the control system, including engineering information, such as the alert configuration or process information, operational information, such as events, alerts, operator actions, etc., and historical information, such as event and alert logs.

In addition to this information from the control system, the analytics component also has access to the inputs provided to the SIEM system, the alerts triggered by the SIEM system, and the actions taken by experts in response to them (e.g., dismissing an alert), as logged by the SIEM system.

Thus, for example, input available to the analytics component comprises control system information, SIEM inputs and alerts, and expert decisions.

The analytics component may employ techniques such as common pattern analysis, trend analysis and anomaly detection methods to provide enhanced insight into the operation of the plant, e.g. supporting experts in assessing alerts triggered by the SIEM system. In particular, this includes assessing the likelihood that such an alert is or is not a false positive (and why), and presenting this information to the expert, identifying information that was correlated with previous expert decision and presenting this information, and suggesting updates to detection rules.

Thus, for example, the analytics component can have the following specifications:
- Input: Control system information (engineering, operational, history), SIEM inputs, SIEM alerts, expert decisions
- Output: Assessment of likelihood of false positive for SIEM alerts, relevant context information (e.g., "you have previously marked such alerts as False Positive if the plant was in state X, and there was an anomaly for tags Y and Z."), and suggested updates to detection rules

Fig. 6 shows, as an example, a workflow of one possible functionality of the analytics component, in which it assists an expert by providing an assessment of the likelihood that a SIEM alert triggered by a detection rule related to alert shelving is a false positive, based on information regarding the state of the plant (control system information), the SIEM inputs (annotated events), and previous expert decisions.

In this example, the analytics component does not rely on the presence of event annotations or marked anomalies. Its output (e.g., false positive assessment, suggested rule updates, relevant context) can be based on any of the inputs it has access to, allowing it to consider context information that was not deemed relevant for event annotations or considered in the SIEM rules themselves.

Hence, with this system enhancement (through the analytics component), the system and accordingly users working with the enhanced SIEM system will be able to leverage the "wider" context, as the analytics component can meaningfully process all relevant information in a manner that supports the user in their technical tasks.

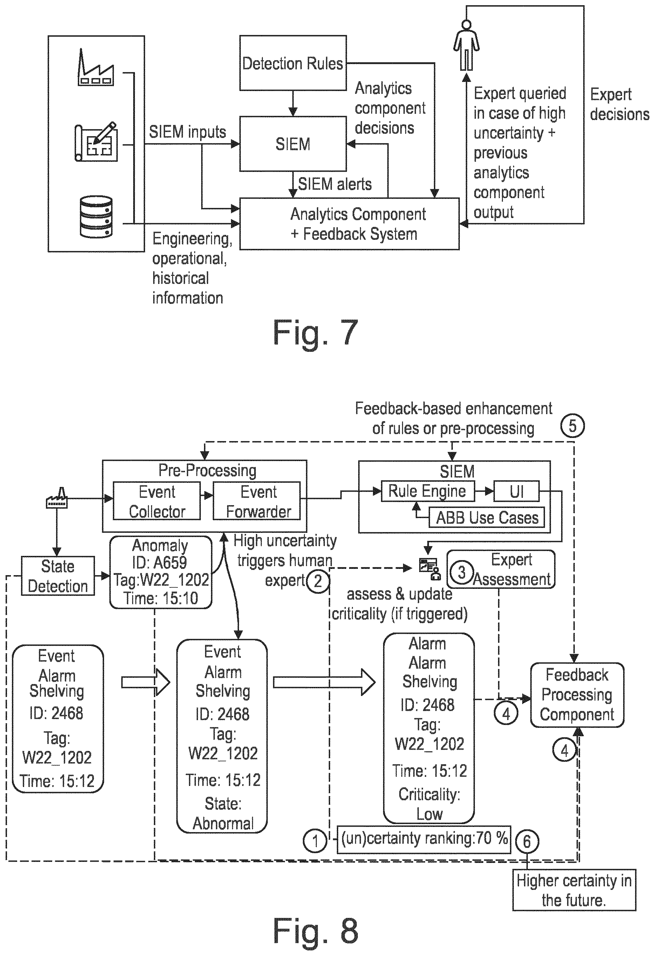

Fig. 7 is a flowchart illustrating an example of the analytics component and a feedback system of the present disclosure cooperating with a SIEM system. Such a system may, for example, provide false alert avoidance with feedback and active learning.

The flowchart of Fig. 7 is similar to that of claim 5. In addition, there is a feedback system. The feedback system may feed back the analytics component's decisions to the SIEM system. Moreover, the example shows that an expert may be queried in case of high uncertainty and be provided with previous analytics component output. The user may then provide feedback (e.g. expert decisions) to the analytics component and feedback system. Optionally, the detection rules may be updated based on the analytics component's decisions, optionally after receiving user confirmation.

In other words, active learning may allow for further improving the above system/method. The analytics component, in this example, interacts directly with the SIEM system to process alerts triggered there, and only questions a user (human expert) in case of high uncertainty (of the SIEM system or the analytics algorithm itself).

The thus obtained user (expert) feedback improves the SIEM rules (or event annotations/pre-processing). This way, through active learning and improved rules, lesser and lesser (human/expert) feedback is required. Thus, human interaction is minimized over time.

The resulting system retains the previously specified inputs and outputs, and is additionally capable of directly interacting with the SIEM system to handle alerts autonomously, given a sufficiently high level of confidence. If this is not the case, the system queries a human expert, providing the same additional information as previously, and learns from the resulting expert decision for future alerts.

Fig. 8 is similar to Fig. 6 except that the feedback component is included, i.e., it may be seen as extension of the previously shown alert shelving example. In this example, the system only triggers a human expert in case of high uncertainty, and otherwise processes the alert on its own. It still suggests rule updates where appropriate. A user may be prompted to assess criticality of an alert in case the analytics component determines having high uncertainty in its determination and the assessment may be used for improving certainty in the future. The results may also be fed back to the SIEM and optionally the pre-processing component. This may involve adapting the SIEM rules.

In all of the above examples, the analytics component could be deployed as part of a tool for SIEM rule maintenance, e.g. that may be deployed on-prem at customer sites. The analytics component may then process historical data from the control system and a history of SIEM alerts and corresponding expert decisions, and suggest rule updates based on this, e.g., to reduce false positives. Generally, but particularly when the analytics component is deployed as part of a tool for SIEM rule maintenance (unlike the scenarios described above), the analytics component may be inactive during normal operation of the system, i.e., it may not necessarily be employed for supporting users during normal operation.

In all of the above examples, federated learning may be used to derive more generic rules from the observations of multiple analytics components deployed alongside independent SIEM systems in different plants.

In all of the above examples, the analytics component may be enabled to autonomously change detection rules in a SIEM system.

In all of the above examples, the analytics component could be deployed as part of a cloud-hosted SIEM system, or as a cloud-based service that can be integrated with other cloud or on-premise SIEM systems.

While the invention has been illustrated and described in detail in the drawings and foregoing description, such illustration and description are to be considered exemplary and not restrictive. The invention is not limited to the disclosed embodiments. In view of the foregoing description and drawings it will be evident to a person skilled in the art that various modifications may be made within the scope of the invention, as defined by the claims.

## Claims

1. A computer-implemented method for industrial plant event handling, the method comprising:
an analytics component employing pattern and/or correlation analysis and/or trend analysis and/or anomaly detection to
in response to an alert being triggered by a Security Information and Event Management, SIEM, system, assess a likelihood of the alert being based on a false positive determination; and/or
in response to an alert being triggered by the SIEM system, intervene in the processing of the alert by the SIEM system; and/or
in response to an alert being triggered by the SIEM system, provide context information relevant for the alert to a user; and/or
propose to a user and/or deploying, autonomously or in response to user confirmation, an update for an alert detection rule of the SIEM system,
based on one or more of:
current alert information comprising, for the alert triggered by the SIEM, SIEM input information associated with the alert, in particular wherein the SIEM input information comprise a subset of current operational information;
control system information including engineering information and/or current operational information and/or historical operational information;
historical alert information comprising, for one or more past alerts triggered by the SIEM system, one or more actions taken by a user in response to the respective alert and operational context of the respective alert, the operational context including SIEM input information associated with the respective alert and/or control system information associated with the respective alert.

2. The method of claim 1, wherein the analytics component assesses the likelihood of the alert being based on a false positive determination based on: current alert information, current operational information, and historical alert information including one or more actions taken by a user in response to alerts and the operational context of the respective alerts.

3. The method of claim 2, wherein the one or more actions comprise dismissal of the alert, wherein the alert is determined and optionally flagged as being based on a false positive determination in case a dismissal rate by a user of alerts in a similar operational context, as determined by the pattern and/or correlation analysis and/or trend analysis and/or anomaly detection, exceeds a predetermined threshold.

4. The method of any of the preceding claims, wherein the analytics component intervening in the processing of the alert by the SIEM comprises the analytics component:
preventing prompting of a user intervention unless an uncertainty of the analytics-component-based assessment of the likelihood that the alert is a false positive exceeds an uncertainty threshold, and/or
unless an uncertainty of the analytics-component-based assessment of the likelihood that the alert is a false positive exceeds an uncertainty threshold, prompting only a user confirmation of a false positive determination.

5. The method of claim 4, wherein the uncertainty is indicative of the uncertainty of the determination by the analytics component whether the alert is based on a true or false positive determination by SIEM, the uncertainty being determined by the analytics component, by employing pattern and/or correlation analysis and/or trend analysis and/or anomaly detection, based on the current alert information and at least one of the historical alert information and the control system information.

6. The method of any of the preceding claims, wherein the analytics component providing context information relevant for the alert comprises determining context information based on current alert information, current operational information, and based on historical alert information for alerts triggered in a similar operational context, as determined by the pattern and/or correlation analysis and/or trend analysis and/or anomaly detection s.

7. The method of claim 6, wherein the context information comprises an indication of user actions taken for alerts in a similar operational context, as determined by the pattern and/or correlation analysis and/or trend analysis and/or anomaly detection, and/or information required for addressing alerts in a similar operational context, as determined by the pattern and/or correlation analysis and/or trend analysis and/or anomaly detection.

8. The method of any of the preceding claims, wherein the analytics component proposing and/or deploying the update for the alert detection rule of the SIEM system comprises analyzing a pattern of user actions in response to alerts triggered by the SIEM system based on the alert detection rule and, based on the pattern, determining whether the alert detection rule should be updated.

9. The method of claim 8, wherein it is determined that the alert detection rule should be updated in response to the pattern indicating higher than expected number of rejections of alerts triggered based on the alert detection rule, particularly triggered in a specific operational context.

10. The method of any of the preceding claims, comprising tailoring a generic SIEM system for a specific industrial plant by, in particular iteratively, deploying one or more updated alert detection rules of the SIEM system.

11. The method of any of the preceding claims, wherein the analytics component is configured to employ machine learning or statistical analysis, in particular comprises a machine learning component trained on the historical alert information, and optionally the control system information, and/or employs statistical analysis of current and historical information, particularly statistical analysis of historical alert information and current alert information.

12. The method of any of the preceding claims, wherein the analytics component comprises a/the machine learning component generating generic alert detection rules based on federated learning carried out by the analytics component and a plurality of further analytics components associated with different industrial plants, in particular, wherein, after generating the generic alert detection rules, the generic alert detection rules are updated by the analytics component to adapt them to the industrial plant.

13. A data processing system (1) comprising one or more processing components configured to carry out the method of any of claims 1 to 12.

14. A computer program product comprising instructions which, when the program is executed by a computer, cause the computer to carry out the method of any of claims 1 to 12.

15. A computer-readable medium comprising instructions which, when executed by a computer, cause the computer to carry out the method of any of claims 1 to 12.
